# EUROPEAN PATENT SPECIFICATION

(11) **EP 4 617 131 B1**
(45) Date of publication and mention of the grant of the patent: **18.11.2026**
(21) Application number: 25161756.9
(22) Date of filing: 05.03.2025
(51) Int. Cl.: B60W 30/095, B60W 30/12, B60W 50/14, B60W 30/09

(54) **VEHICLE CONTROL DEVICE AND COMPUTER PROGRAM**
FAHRZEUGSTEUERUNGSVORRICHTUNG UND COMPUTERPROGRAMM
DISPOSITIF DE COMMANDE DE VÉHICULE ET PROGRAMME INFORMATIQUE

(30) Priority: 12.03.2024 JP 2024038456
(43) Date of publication of application: 17.09.2025
(73) Proprietor: TOYOTA JIDOSHA KABUSHIKI KAISHA, Toyota-shi, Aichi-ken, 471-8571 (JP)
(72) Inventor: OGAWA, Toshiro, Toyota-shi, Aichi-ken, 471-8571 (JP)
(74) Representative: Cabinet Beau de Loménie

(56) References cited:
- EP-A1- 2 298 626
- EP-A1- 2 338 758
- US-A1- 2023 211 824
- US-B2- 11 702 072

## Description

### TECHNICAL FIELD

The present disclosure relates to a vehicle control device and a computer program for performing driver assist of a vehicle.

In recent years, a lane departure suppression control function keeping a vehicle running in a lane from departing from the lane has been mounted in vehicles. Lane departure suppression control outputs a predetermined warning to a user in case a vehicle approaches a boundary of a lane and controls a steering device so as to keep the vehicle inside the lane. For example, PTL 1 (Japanese Unexamined Patent Publication No. 2012-128748) describes a driver assist device which performs lane departure suppression control based on a lane in case of a lane can be recognized and, in case of a lane cannot be recognized, sets an imaginary lane, and performs lane departure suppression control based on the imaginary lane. The driver assist device described in PTL 1 is provided with a detection part for detecting a road width and a control part for setting an imaginary lane based on the road width and performing lane departure suppression control based on the imaginary lane.
PTL 2 (US 2023/211824 A1) discloses a driving assistance device that includes a processor and a memory and assists driving of a vehicle.
PTL 3 (US 11 702 072 B2) discloses a device and a method for assisting in the driving of a motor vehicle, including a line detector for detecting the boundary line of a traffic lane.
PLT4 (EP 2298626 Al) and PLT 5 (EP 2338758 Al) disclose driving assistance systems that control travelling of the vehicle so that the vehicle travels without deviating from the lane along which it travels.

### SUMMARY

### TECHNICAL PROBLEM

According to the driver assist device described in PTL 1, if there is a vehicle or other object present in the imaginary lane, in case of avoiding the object, the vehicle sometimes approaches a boundary of the imaginary lane leading to lane departure suppression control being performed. Therefore, according to the driver assist device described in PTL 1, in case of avoiding an object, there is a possibility that lane departure suppression control will be frequently performed and that a user will feel bothered.

The present disclosure has as its object the provision of a vehicle control device and a computer program able to perform lane departure suppression control taking into account the presence of objects.

### SOLUTION TO PROBLEM

One aspect of the present disclosure is a vehicle control device as defined in claim 1. A second aspect is a computer program as defined in claim 7.

### ADVANTAGEOUS EFFECTS OF INVENTION

According to the present disclosure, it is possible to perform lane departure suppression control taking into account the presence of an object.

### BRIEF DESCRIPTION OF DRAWINGS

FIG. 1 is a block diagram showing the configuration of a vehicle control device according to an embodiment.
FIG. 2 is a view explaining lane departure suppression control in a normal mode.
FIG. 3 is a view explaining lane departure suppression control in an object avoidance mode.
FIG. 4 is a view explaining lane departure suppression control in an object avoidance mode.
FIG. 5 is a view showing a method of setting a clearance distance.
FIG. 6 is a view showing a method of setting a predetermined distance of a start position of lane departure suppression control.
FIG. 7 is a view showing a method of setting an offset amount.
FIG. 8 is a flow chart showing a flow of processing of a method of lane departure suppression control.
FIG. 9 is a flow chart showing a flow of processing of lane departure suppression control in a normal mode.
FIG. 10 is a flow chart showing a flow of processing of an object avoidance mode.

### DESCRIPTION OF EMBODIMENTS

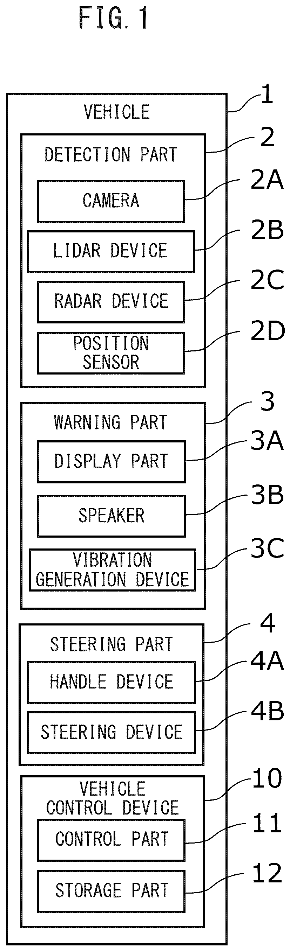

As shown in FIG. 1, a vehicle 1 is provided with a vehicle control device 10 for performing driver assist. The vehicle 1 is provided with a detection part 2 for performing the detection necessary for driver assist. The detection part 2, for example, is configured to detect the environment in the surroundings of the vehicle 1 and to output detection values. The detection part 2 is, for example, comprised of a camera 2A. The camera 2A, for example, captures an image in an advancing direction of the vehicle 1 and outputs the image capture data to the vehicle control device 10. The detection part 2 may also be configured by more than one camera 2A so as to capture images of the environment of the surroundings of the vehicle 1.

The detection part 2 may be provided with not just the camera 2A, but also a lidar device 2B or a radar device 2C for detecting an object in the surroundings of the vehicle 1. The lidar device 2B acquires 3D (three dimensional) data of an object in the surroundings of the vehicle 1 based on a lidar (light detection and ranging) system scanning the surroundings by a laser beam and measuring the reflected light. The radar device 2C emits a radar wave and measures the reflected wave to detect an object present in the surroundings of the vehicle 1. The detection part 2 may also be provided with a position sensor 2D for measuring the current position of the vehicle 1. The position sensor 2D is, for example, configured by a GPS (global positioning system) sensor etc. The position sensor 2D is, for example, used for a navigation device.

The camera 2A, for example, may be comprised of a single lens reflex camera and may be comprised by a twin lens reflex camera. The camera 2A captures an image of at least the environment in the advancing direction of the vehicle 1 and generates image capture data including the lane in which the vehicle 1 is running. The image capture data is moving image data generated based on a predetermined frame rate and can be converted to still image data by separating the frames. The camera 2A is used for driver assist control of the vehicle 1. The camera 2A may also be used as a drive recorder. The image capture data, as explained later, is used for lane departure suppression control of the vehicle 1.

The vehicle 1 is provided with a warning part 3 for outputting a warning to a user. The warning part 3 is, for example, comprised of a display part 3A able to display an image, a speaker 3B able to output audio, a vibration generation device 3C for generating vibration, etc. The warning part 3 is controlled by the vehicle control device 10. The display part 3A, for example, is comprised of a liquid crystal display, an organic EL (electro-luminescence) display, or other display device. The display part 3A, for example, displays a display image showing content of a warning in case of driver assist has been performed.

The display part 3A may be configured so as to display the display content of a navigation device provided at the vehicle 1. The display part 3A may also be comprised of a touch panel. The display part 3A may further be configured as an input part for receiving input operations entered by a user. In this case, the display part 3A may display a display image for receiving the input operations. The display part 3A may also be realized by communication with a smart phone or other portable terminal device held by a user.

The speaker 3B outputs audio of warning content in case of driver assist has been performed. The vibration generation device 3C is configured to generate vibration and make the user physically feel the vibration. The vibration generation device 3C outputs a warning based on vibration to the driver. The vibration generation device 3C, for example, is provided at a handle device by which the driver performs a steering operation or at the driver's seat.

The vehicle 1 is provided with a steering part 4 for control of the advancing direction. The steering part 4 is comprised of a handle device 4A for receiving steering operations by the driver and a steering device 4B for making the direction of the wheels of the vehicle 1 change based on a steering operation of the handle device. The steering part 4 is operated jointly by the driver and the vehicle control device 10. In a case where the vehicle 1 is a manually driven vehicle, at the steering part 4, part or all of the steering content is controlled by the vehicle control device 10. In case of the vehicle 1 is an auto driving vehicle, at the steering part 4, the steering content is automatically controlled by the vehicle control device 10.

The handle device 4A, for example, is configured to lighten the load of the steering operation by a power steering device. The handle device 4A is controlled by the vehicle control device 10 so that in case of lane departure suppression control has been performed, a steering operation is performed in a direction keeping the vehicle 1 from departing from the lane. The handle device 4A may also be configured to be controlled by the vehicle control device 10 so that in case of lane departure suppression control has been performed, a reaction force is given in a direction keeping the vehicle 1 from departing from the lane.

The handle device 4A may also be provided with the vibration generation device 3C and vibration may be transmitted to the hands of the driver in case of lane departure suppression control has been performed. The handle device 4A, for example, is connected to the steering device 4B through a steering shaft and transmits a steering operation by the driver to the steering device 4B. The handle device 4A may also be configured as a steer-by-wire system electrically transmitting a steering operation to the steering device 4B.

The steering device 4B is configured so as to change the steering angle of the steered wheels in accordance with the amount of the steering operation of the handle device 4A. The steering device 4B may also be configured to adjust the drive forces of a plurality of wheels so as to change the advancing direction of the vehicle 1. The steering device 4B is controlled by the vehicle control device 10 and makes the steering angle of the steered wheels change to a direction keeping the vehicle 1 from departing from the lane in case of lane departure suppression control is performed.

The vehicle control device 10 is provided with a control part 11 for performing control relating to running of the vehicle 1 and a storage part 12 in which data and programs required for control are stored. The control part 11 is configured by at least one CPU (central processing unit) or other hardware processor. The storage part 12 is configured by a hard disk drive (HDD), solid state disk (SSD), or other non-transitory storage medium. The storage part 12 may also store map data used for a navigation device.

The storage part 12 stores data of the detection values output from the detection part 2. The data of the detection values may be stored for a predetermined time period, then updated with new data of the detection values. The control part 11 performs lane departure suppression control for keeping the vehicle 1 from departing from the lane based on detection values detecting the environment of the surroundings of the vehicle.

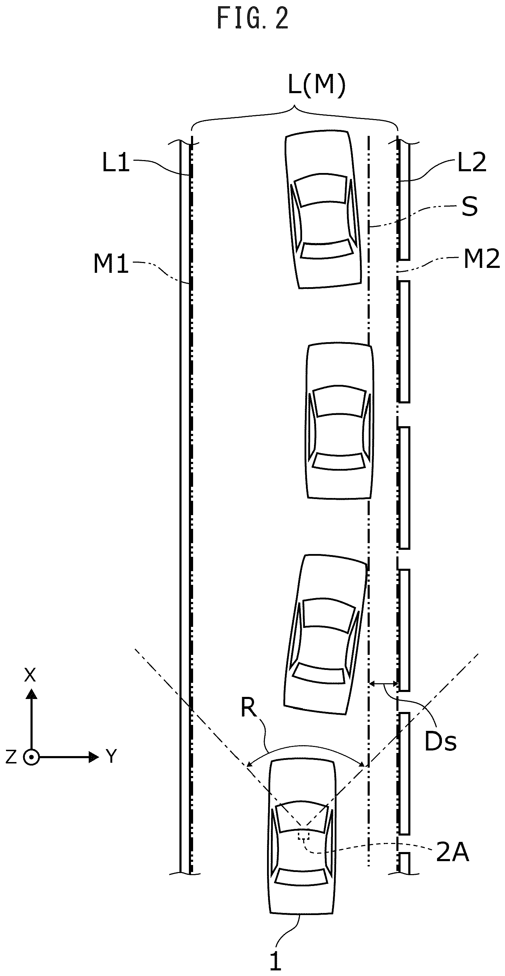

As shown in FIG. 2, the vehicle 1 is subjected to lane departure suppression control while running in the lane L on the road. The illustrated example shows lane departure suppression control by the normal mode in the state where there is no obstacle or other object in the lane L. The camera 2A captures an image of the environment outside the vehicle including a front width of the road at which the lane L is provided in the image capture range R. The camera 2A outputs the image capture data to the vehicle control device 10. In the vehicle control device 10, the control part 11 stores the image capture data in the storage part 12.

The control part 11, for example, automatically starts the lane departure suppression control. The control part 11 may also start the lane departure suppression control based on an operation by the user. The control part 11 acquires the image capture data capturing the surroundings of the vehicle 1 at the current position of the vehicle 1 during performance of lane departure suppression control and analyzes the image capture data. The control part 11 is configured to perform SLAM (simultaneous localization and mapping) for generating an environment map at the current position of the vehicle 1 based on the image capture data and map data stored in the storage part 12. The environment map reproduces the environment of the surroundings at the current position of the vehicle 1 by 3D data.

The control part 11 performs SLAM and recognizes the environment of the surroundings of the vehicle 1 based on the generated environment map. The control part 11 recognizes the environment of the surroundings of the vehicle 1, including an object present on the load, together with the image capture data and detection values of the camera 2A, lidar device 2B and radar device 2C.

The control part 11 may recognize the environment of the surroundings of the vehicle 1 based on judgment processing utilizing AI (artificial intelligence). The control part 11, for example, may also be configured to be able to perform deep learning or other supervised machine learning in advance, analyze the image capture data, and recognize roads, objects, and structures recorded in the image capture data. The control part 11 may also be configured so as to perform analysis based on another technique if able to recognize the environment of the surroundings of the vehicle 1.

The control part 11 recognizes the lane L in which the vehicle 1 is running based on the image capture data. The control part 11, for example, recognizes the boundaries of the road present ahead of the vehicle 1. The control part 11, for example, recognizes the boundaries of the road based on lane marks provided on the road. The lane marks are white lines, yellow lines, or other different color line shaped marks and may be shown by continuous lines or broken lines. If lane marks cannot be recognized on the road, the control part 11 recognizes paved surfaces, step differences, side grooves, guard rails, or other structures, sidewalks, etc. on the road and recognizes their boundaries as boundaries of the road.

The control part recognizes a first boundary L1 and a second boundary L2 on the road. The control part 11 recognizes the lane L between the first boundary L1 and the second boundary L2. In the illustrated figure, for convenience, the first boundary L1 is made the left side from the advancing direction of the vehicle 1 and the second boundary L2 is made the right side from the advancing direction of the vehicle 1. The relative placements of the first boundary L1 and the second boundary L2 may be switched in the left-right direction. The control part 11 sets a first imaginary boundary M1 forming the basis for processing on the recognized first boundary L1. The control part 11 sets a second imaginary boundary M2 forming the basis for processing on the recognized second boundary L2. The control part 11 performs lane departure suppression control so as not to depart from inside the imaginary lane M set between the first imaginary boundary M1 and the second imaginary boundary M2.

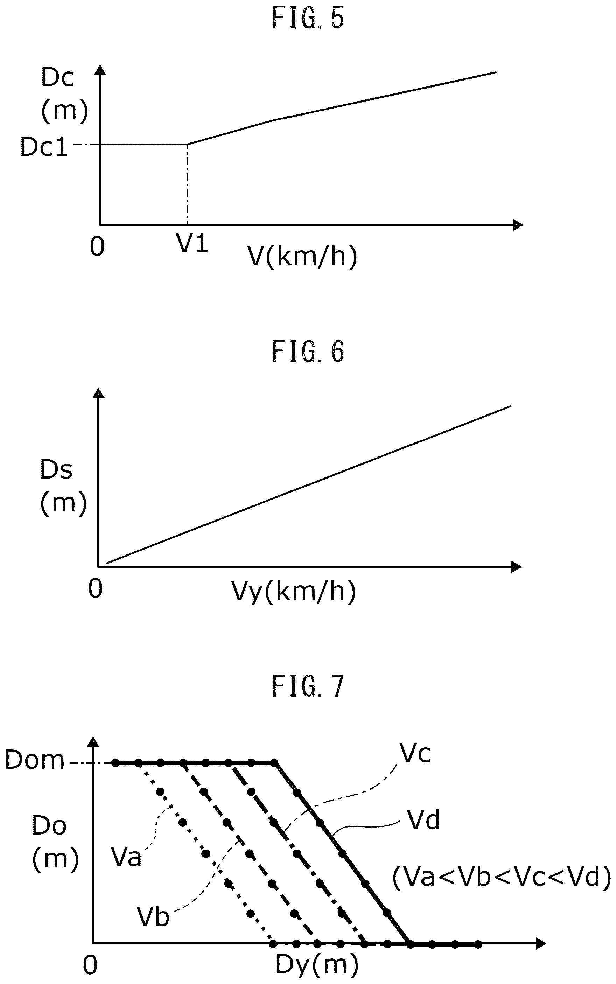

The control part 11 judges whether the vehicle 1 is approaching one imaginary boundary of the first imaginary boundary M1 or the second imaginary boundary M2 based on the time analysis of the image capture data. In the illustrated example, the vehicle 1 is explained as approaching the second imaginary boundary M2 side. If, for example, it is judged that the vehicle 1 is approaching the second imaginary boundary M2, the control part 11 sets the second imaginary boundary M2 based on lane departure suppression control. The control part 11 sets a start position S of the lane departure suppression control at a position away from the second imaginary boundary M2 to the vehicle 1 side by a predetermined distance Ds. The control part 11 adjusts the predetermined distance Ds in accordance with the horizontal movement speed Vy of the vehicle 1 to set the start position (see FIG. 6). The start position S is an imaginary reference line becoming the reference for processing set from the second imaginary boundary M2 to the vehicle 1 side.

The control part 11 analyzes the image capture data and calculates the horizontal movement speed Vy in the transverse direction of the vehicle 1 (Y-axial direction of FIG. 2) perpendicularly intersecting the lane direction of the lane L (X-axial direction of FIG. 2) based on the position of the vehicle 1 in the transverse direction and the change along with time of the positional relationship with the second imaginary boundary M2. The control part 11 adjusts the predetermined distance Ds proportional to the absolute value of the horizontal movement speed Vy to set the start position S. The control part 11 judges the presence of any operation of a turning signal. If there is operation of a turning signal, the control part 11 judges that the vehicle 1 is in the middle of a lane change and does not perform lane departure suppression control even if the vehicle 1 reaches the start position S.

If in a state where a turning signal is not being operated and the vehicle 1 reaches the start position S, the control part 11 makes the display part 3A show a display image prompting attention to lane departure. The control part 11 simultaneously outputs a warning sound from the speaker 3B, makes the vibration generation device 3C operate, and transmits the vibration to the handle device 4A or the driver's seat.

If the vehicle 1 strays over the start position S and approaches the second imaginary boundary M2, the control part 11 controls the handle device 4A and steering device 4B to adjust the angle of the steered wheels so that the vehicle 1 moves away from the second imaginary boundary M2. At this time, if the driver is operating the handle device 4A for steering so that vehicle 1 heads toward the second imaginary boundary M2 side, the control part 11 controls the steering device 4B to make the reaction force of the handle device 4A increase the more the handle angle increases in the direction toward the second imaginary boundary M2. The control part 11 stops control of the warning part 3 and steering part 4 if vehicle 1 then moves away from the start position S.

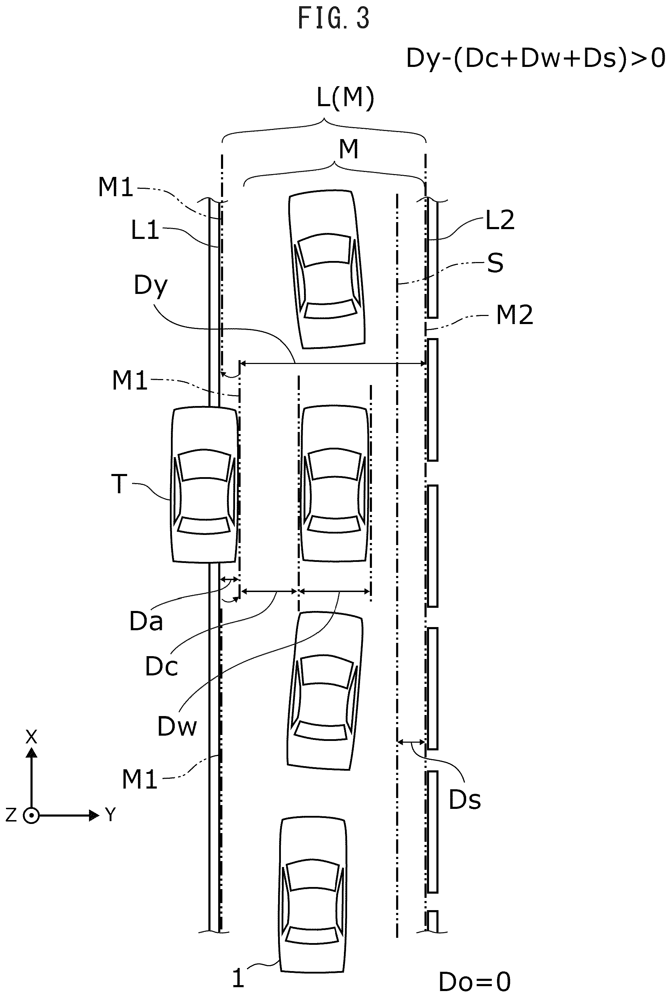

FIG. 3 shows the state where there is an object present inside the lane L. In the illustrated example, the case where an amount of protrusion Da of the object T is small and the second boundary L2 and the second imaginary boundary M2 match at the side of the object T will be explained. If there is a parked vehicle or other object T present in the lane L, the control part 11 performs lane departure suppression control based on the object avoidance mode for avoiding the object T. In the illustrated example, the object T is present at the first boundary L1 side. The control part 11 performs lane departure suppression control so that the vehicle 1 does not depart from the second boundary L2 while the vehicle 1 is avoiding the object T.

The control part 11 recognizes the first boundary L1 and the second boundary L2 in the region at the closer side of the object T on the road (vehicle 1 side). The control part 11 recognizes the span between the first boundary L1 and the second boundary L2 as the lane L. The control part 11 sets the first imaginary boundary M1 forming the basis of processing on the recognized first boundary L1. The control part 11 sets the second imaginary boundary M2 forming the basis for processing on the recognized second boundary L2. The control part 11 performs lane departure suppression control of the normal mode at the region at the closer side of the object T.

The control part 11 recognizes an object T present on the first boundary L1 and protruding into the lane L. If recognizing the object T, the control part 11 starts the object avoidance mode different from the normal mode. The object avoidance mode is lane departure suppression control for avoiding the object T. The control part 11 measures the amount of protrusion Da of the object T protruding from the first boundary L1 to the inside of the lane L. The control part 11 sets the clearance distance Dc separated from the side surface of the object T protruding into the lane L toward the transverse direction in accordance with the speed of the vehicle 1. The clearance distance Dc is the distance provided for preventing contact of the object T and the vehicle 1.

If the vehicle 1 starts avoiding the object T, the control part 11 adjusts the clearance distance Dc in accordance with the speed V (km/h) of the vehicle 1. The control part 11 sets the clearance distance Dc larger the greater the speed V of the vehicle 1 (see FIG. 5). The control part 11 analyzes the image capture data over time and calculates the speed of the vehicle 1. If able to acquire a detection value of the degree of acceleration occurring at the vehicle 1, the control part 11 may also calculate the speed of the vehicle 1 based on the components of the acceleration degree in the three axial directions.

The control part 11 analyzes the image capture data along with time and sets the clearance distance Dc based on the current distance between the vehicle 1 and the second boundary L2. The control part 11 moves the first imaginary boundary M1 from the first boundary L1 to the inside of the lane L by the distance of the amount of protrusion Da at the side of the object T. The control part 11 sets the imaginary lane M between the first imaginary boundary M1 and the second imaginary boundary M2 after movement at the side of the object T.

The control part 11 measures a first width Dy of a distance from the side surface of the object T to the second boundary L2. The control part 11, for example, judges whether the vehicle 1 strays over the start position S based on the following judgment formula (1) in case of securing the clearance distance Dc while avoiding the object T. The control part 11 compares the first width Dy and the total value of the clearance distance Dc, vehicle width Dw, and predetermined distance Ds constituting the second width (Dc+Dw+Ds):$Dy - \left(Dc+Dw+Ds\right)$ (1) The control part 11 judges that the vehicle 1 has not strayed over the start position S based on the following judgment formula (1) in case of the differential value of the first width minus the second width is larger than 0 at the time of securing the clearance distance Dc while avoiding the object T.

The control part 11 sets the second imaginary boundary M2 set on the second boundary L2 at the side of the object T serving as the basis of the lane departure suppression control without moving it. The control part 11 sets the start position S of the lane departure suppression control in the lane L based on the second imaginary boundary M2 set on the second boundary L2.

The control part 11, for example, starts the object avoidance mode if the vehicle 1 reaches the position of a predetermined distance from the rear end of the object T and the horizontal movement speed in a direction heading toward the second boundary L2 increases. The control part 11 sets the imaginary lane M between the first imaginary boundary M1 and the second imaginary boundary M2 after movement in the object avoidance mode. The control part 11 performs lane departure suppression control while avoiding the object T inside the imaginary lane M set between the first imaginary boundary M1 and the second imaginary boundary M2 after movement at the side of the object T.

If in a state where a turning signal is not being operated and the vehicle 1 reaches the start position S, the control part 11 outputs a predetermined warning from the warning part 3 and controls the steering part 4 so that the vehicle 1 does not stray over the second imaginary boundary M2. If, for example, the front end of the vehicle 1 is positioned ahead compared with the front end of the object T and the horizontal movement speed in a direction away from the second boundary L2 is increasing, the control part 11 cancels the object avoidance mode. The control part 11 performs lane departure suppression control of the normal mode after cancelling the object avoidance mode.

The object T may be in a stopped state or may be in a moving state. If the object T is in a moving state, the control part 11 may frequently update the positional relationship of the object T and the first boundary L1 and the second boundary L2 and perform lane departure suppression control based on the object avoidance mode. The moving object T may be a pedestrian, minicar, two-wheeled vehicle, etc. If the object T is moving, the control part 11 sets the parameters in the object avoidance mode based on the relative distance, relative speed, and relative horizontal movement speed with the object T.

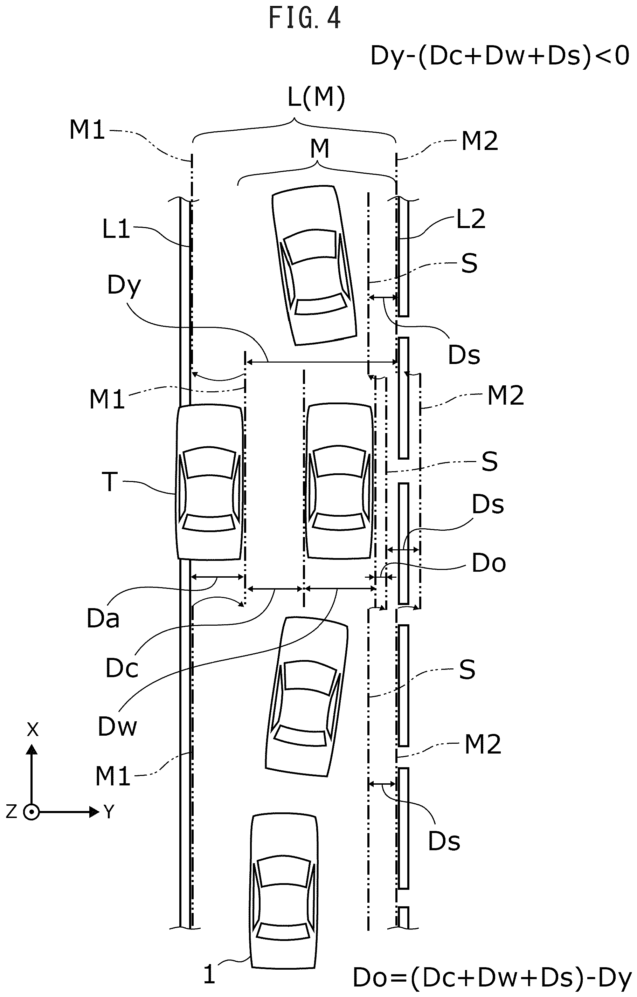

FIG. 4 shows the state where there is an object present in the lane L. In the illustrated example, the case where the amount of protrusion Da of the object T is great and the second imaginary boundary M2 is set offset compared with the second boundary L2 will be explained. In the example of FIG. 4, in the same way as the example of FIG. 3, if setting the second imaginary boundary M2, there is a possibility that the vehicle 1 will approach the start position S while avoiding the object T and a warning will frequently be output from the warning part 3. Below, the case where warnings output from the warning part 3 are suppressed while lane departure suppression control based on the object avoidance mode is performed will be explained.

If there is a parked vehicle or other object T inside the lane L, the control part 11 performs lane departure suppression control based on the object avoidance mode for avoiding the object T. In the illustrated example, the object T is present at the first boundary L1 side. If, for example, the vehicle 1 has reached a position a predetermined distance away from the rear end of the object T and the speed of horizontal movement toward the second boundary L2 is increasing, the control part 11 starts the object avoidance mode.

The control part 11 performs lane departure suppression control so that the vehicle 1 in the middle of the object avoidance mode does not depart from the second boundary L2 while the vehicle 1 is avoiding the object T. The control part 11 recognizes the first boundary L1 and the second boundary L2 in the region at the closer side of the object T. The control part 11 recognizes the span between the first boundary L1 and the second boundary L2 as the lane L. The control part 11 sets the first imaginary boundary M1 forming the basis for processing on the recognized first boundary L1. The control part 11 sets the second imaginary boundary M2 forming the basis for processing on the recognized second boundary L2.

The control part 11 recognizes an object T present on the first boundary L1 and protruding inside the lane L. The control part 11 measures the amount of protrusion Da of the object T. The control part 11 sets the clearance distance Dc of separation from the side surface of the object T toward the transverse direction in accordance with the speed of the vehicle. The control part 11 adjusts the clearance distance Dc in accordance with the speed V of the vehicle 1 if the vehicle 1 starts avoidance of the object T (see FIG. 5). The control part 11 moves the first imaginary boundary M1 to a position from the first boundary L1 to inside the lane L by a distance of the amount of protrusion Da at the side of the object T. That is, the control part 11 sets the first imaginary boundary M1 at the position of the side surface of the object T at the side inside the lane L. The control part 11 sets the imaginary lane M at the side of the object T between the first imaginary boundary M1 and the second imaginary boundary M2 after movement.

The control part 11 measures the first width Dy from the side surface of the object T to the second boundary L2. The control part 11, for example, judges whether the vehicle 1 strays over the start position S in case of securing a clearance distance Dc while avoiding the object T based on the judgment formula (1). The control part 11 subtracts from the first width Dy a second width comprised of a total value of the clearance distance Dc, vehicle width Dw, and predetermined distance Ds to calculate the differential value.

If the differential value is smaller than 0, the control part 11 judges that the vehicle 1 has strayed over the start position S in case of securing a clearance distance Dc while avoiding the object T. If the vehicle 1 strays over the start position S in case of securing the clearance distance Dc while avoiding the object T, the control part 11 calculates the amount of offset Do for offsetting the second imaginary boundary M2 to the outside of the lane L based on the following formula (2):$Do = \left(Dc+Dw+Ds\right) - Dy$ (2)

If the vehicle 1 strays over the start position S, the control part 11 moves the second imaginary boundary M2 from the second boundary L2 to outside the lane L at the side of the object T.

The control part 11 sets the second imaginary boundary M2 at a position moved from the second boundary L2 to outside the lane L by the distance of the amount of offset Do. The control part 11 sets the start distance S away from the second imaginary boundary M2 in the inside direction of the lane L by the predetermined distance Ds. That is, the control part 11 sets the second imaginary boundary M2 at which the start position S of the lane departure suppression control is set in the inside direction of the lane L in accordance with the first width Dy of the distance between the first imaginary boundary M1 and the second boundary L2. The control part 11 sets the second imaginary boundary M2 after movement based on the lane departure suppression control.

The control part 11 sets the imaginary lane M between the first imaginary boundary M1 after movement and the second imaginary boundary M2 after movement at the side of the object T. The control part 11 performs lane departure suppression control while securing the clearance distance Dc and avoiding the object T in the imaginary lane M set between the first imaginary boundary M1 after movement and the second imaginary boundary M2 after movement at the side of the object T. If in a state where there is no turning signal operated and the vehicle 1 has reached the start position S, the control part 11 outputs a predetermined warning from the warning part 3 and controls the steering part 4 so that the vehicle 1 does not stray over the second imaginary boundary M2.

The control part 11 makes a predetermined warning be output from the warning part 3 if the vehicle 1 has strayed over the start position S in the imaginary lane M at the side of the object T. If the vehicle 1 has strayed over the start position S in the imaginary lane M, the control part 11 controls the steering part 4 to keep the vehicle 1 from departing from the imaginary lane M. Even if the vehicle approaches the second boundary L2 by within the predetermined distance Ds from the start position S before movement at the side of the object T, the control part 11 does not output a predetermined warning from the warning part 3. If moving the start position S at the side of the object T, the control part 11 performs lane departure suppression control based on the start position S after movement without performing lane departure suppression control based on the start position S before movement. According to the above control, by moving the start position S at the side of the object T, it is possible to reduce the frequency of output of a predetermined warning from the warning part 3 compared with in case of not moving the start position S.

The object T may not only be in a stopped state, but may also be in a moving state. The control part 11 cancels the object avoidance mode if, for example, the front end of the vehicle 1 is positioned at the front from the front end of the object T and the speed of horizontal movement moving away from the second boundary L2 is increasing. After cancelling the object avoidance mode, the control part 11 performs the usual lane departure suppression control with respect to the lane L.

FIG. 5 shows the method of setting the clearance distance Dc. If the speed V of the vehicle 1 is less than a predetermined speed V1, the control part 11 sets the clearance distance Dc at a certain value Dc1. If the speed V of the vehicle 1 is greater than or equal to the predetermined speed V1, the control part 11 makes the clearance distance Dc increase proportionally to the speed V of the vehicle 1. The predetermined speed V1 may also be the speed 0.

FIG. 6 shows a method of setting a predetermined distance Ds for setting the start position S of the lane departure suppression control. The control part 11 makes the value of the predetermined distance Ds increase proportionally to the horizontal movement speed Vy of the vehicle 1. The control part 11 sets the start position S of the lane departure suppression control at a position away from the second imaginary boundary M2 to the vehicle 1 side by the predetermined distance Ds based on the value of the predetermined distance Ds calculated based on the horizontal movement speed Vy of the vehicle 1.

FIG. 7 shows the technique for calculating the amount of offset Do of the second imaginary boundary M2. If judging that the imaginary lane M does not fit in the lane L based on the judgment formula (1), the control part 11 calculates the amount of offset of the second imaginary boundary M2. The control part 11 subtracts from the second width (Dc+Dw+Ds) the first width Dy to calculate the amount of offset Do based on formula (2). The control part 11 sets the amount of offset Do to become larger the smaller the first width Dy defined by the distance from the side surface of the object T to the second boundary L2.

The control part 11 sets the amount of offset Do so as to become larger the greater the speed V or the horizontal movement speed Vy of the vehicle 1 with respect to the same first width Dy. The control part 11 sets the upper limit value Dom to the amount of offset Do so that the start position S does not become beyond the lane L. If judging that the vehicle 1 has not strayed over the start position S, the control part 11 sets the amount of offset Do to zero.

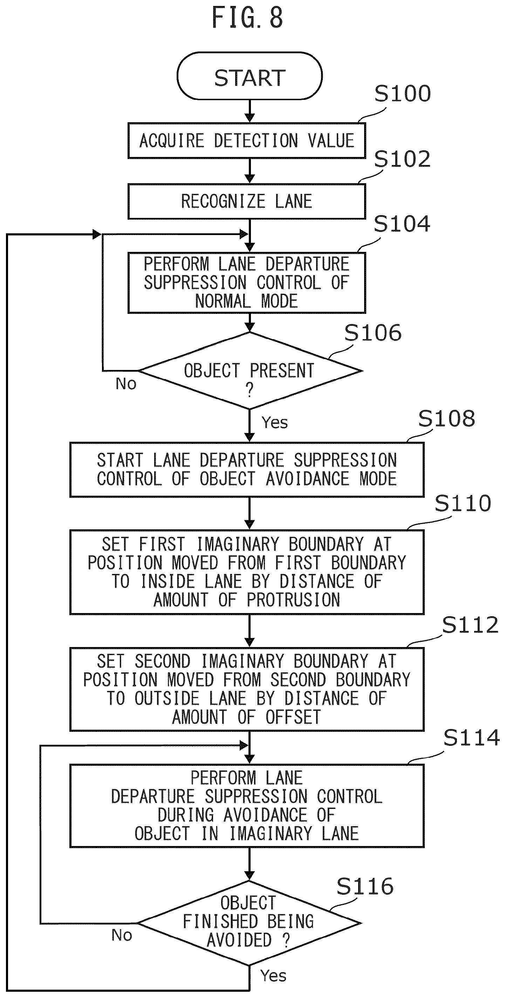

**0056]** FIG. 8 shows the flow of processing of the method of lane departure suppression control performed at the vehicle control device 10. The method of lane departure suppression control is performed by a computer program installed in a computer mounted in the vehicle control device 10. The program makes the computer perform the following processing.

The control part 11 acquires detection values detecting the environment of the surroundings of the vehicle 1 from the detection part 2 (S100). The control part 11 recognizes the lane L between the first boundary L1 and the second boundary L2 based on detection values including the image capture data of the camera 2A, the data of measurement values of the lidar device 2B, and data of measurement values of the radar device 2C (S102). The control part 11 performs lane departure suppression control of the normal mode so that the vehicle 1 runs inside the lane L (S104).

The control part 11 judges whether there is an object T present inside the lane L (S106). If judging that there is an object T present inside the lane L, the control part 11 starts the lane departure suppression control of the avoidance mode of the object T (S108). If recognizing there is an object T present inside the lane L at the first boundary L1, the control part 11 sets the first imaginary boundary M1 at a position moved from the first boundary L1 to inside the lane by the distance of the amount of protrusion Da (S110). That is, the control part 11 sets the first imaginary boundary M1 at the position of the side surface of the object T at the inside of the lane L. The control part 11 sets the second imaginary boundary M2 so as to become a position moved from the second boundary L2 to outside the lane L by the distance of the amount of offset Do (S112). That is, the control part 11 sets the second imaginary boundary M2 at which the start position S of the lane departure suppression control is set in the inside direction of the lane L in accordance with the first width Dy of the distance between the first imaginary boundary M1 and the second boundary L2.

The control part 11 performs lane departure suppression control during avoidance of object T in the imaginary lane M set between the first imaginary boundary M1 and the second imaginary boundary M2 (S114). The control part 11 judges whether avoidance of the object T by the vehicle 1 has ended (S116). If it judges that avoidance of the object T by the vehicle 1 has ended, the control part 11 returns the processing to S104 and continues lane departure suppression control.

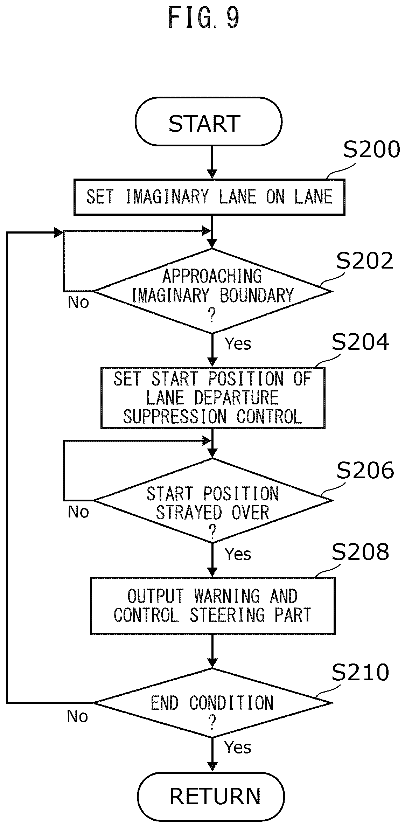

FIG. 9 shows the flow of processing of lane departure suppression control of the normal mode performed at S104. The control part 11 sets the first imaginary boundary M1 on the first boundary L1 on the lane L, sets the second imaginary boundary M2 on the second boundary L2, and sets the imaginary lane M between the first imaginary boundary M1 and the second imaginary boundary M2 (S200). The control part 11 judges whether the vehicle 1 is approaching one imaginary boundary of the first imaginary boundary M1 or the second imaginary boundary M2 based on the horizontal movement speed Vy of the vehicle 1 (S202). If judging that the vehicle 1 is approaching the imaginary boundary, the control part 11 sets the start position S of the lane departure suppression control at a position separated from the imaginary boundary being approached to the inside of the imaginary lane M by a predetermined distance Ds (S204).

The control part 11 judges whether the vehicle 1 has strayed over the start position S (S206). If the vehicle 1 has strayed over the start position S, the control part 11 outputs a predetermined warning from the warning part 3 and controls the steering part 4 to make the vehicle 1 move away from the imaginary boundary (S208). The control part 11 judges if an end condition of lane departure suppression control stands (S210).

End conditions include, for example, an operation by the user for cancelling lane departure suppression control, the case where an imaginary lane M cannot be set, the end of operation of the vehicle 1, or other case where lane departure suppression control becomes unnecessary. If an end condition stands, the control part 11 stops lane departure suppression control, while if an end condition does not stand, it returns the processing to S202 and continues lane departure suppression control.

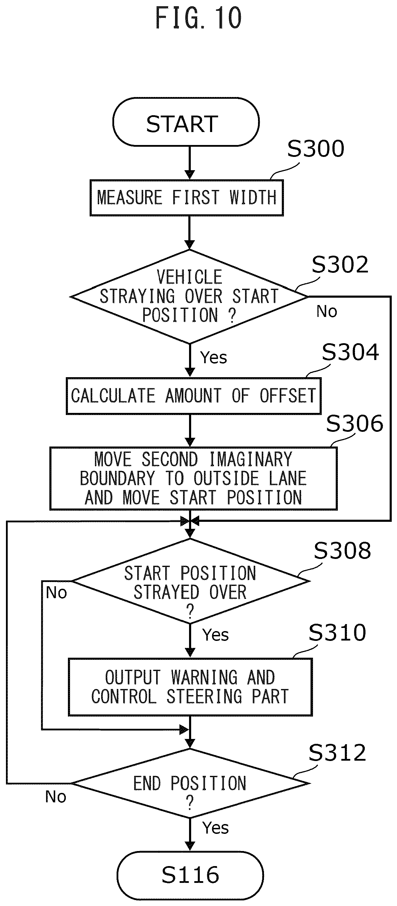

FIG. 10 shows the flow of processing in the method of setting the second imaginary boundary M2 in the object avoidance mode performed at S112. The control part 11 measures the first width Dy at the side of the object T (S300). The control part 11 calculates the second width at the side of the object T and secures the clearance distance Dc based on the differential value obtained by subtracting the second width from the first width while judging whether the vehicle 1 is straying over the start position S in case of the vehicle 1 avoids the object T (S302).

If judging that the vehicle 1 has not strayed over the start position S at the side of the object T, the control part 11 makes the processing proceed to S308. If judging that the vehicle 1 has strayed over the start position S at the side of the object T, the control part 11 sets the absolute value of the differential value as the offset amount, moves the second imaginary boundary M2 to a position offset from the second boundary L2 to outside the lane by the distance of the offset amount, and also moves the start position S in accordance with the moved second imaginary boundary M2 (S306).

The control part 11 judges whether the vehicle 1 has strayed overed the start position S after movement (S308). If the vehicle 1 has strayed over the start position S after movement, the control part 11 outputs a predetermined warning from the warning part 3 and controls the steering part 4 to make the vehicle 1 move away from the second imaginary boundary M2 (S310). The control part 11 judges whether vehicle 1 has reached the end position of the object avoidance mode (S312). If the vehicle 1 has reached the end position of the object avoidance mode, the control part 11 proceeds to S116. If the vehicle 1 has not reached the end position of the object avoidance mode, the control part 11 returns the processing to S308.

As explained above, according to the vehicle control device 10, it is possible to perform lane departure suppression control taking into account the presence of an object on the road. According to the vehicle control device 10, it is possible to perform lane departure suppression control based on the object avoidance mode in case of the vehicle 1 avoids an object T. According to the vehicle control device 10, if it is judged that the vehicle 1 securing a clearance distance at the side of the object T while engaged in an avoidance operation in the object avoidance mode has strayed over the start position S of lane departure suppression control, the start position S can be moved so as to approach the second boundary L2 side to thereby keep a predetermined warning from being output from the warning part 3.

According to the vehicle control device 10, if the start position S is moved so as to approach the second boundary L2 side in the object avoidance mode, a predetermined warning can be kept from being output from the warning part 3 so as to keep a user from feeling bothered.

In the above-mentioned embodiments, the computer program which is run in the components of the vehicle control device 10 may be provided in a form recorded in a computer readable portable recording medium such as a semiconductor memory, magnetic recording medium, or optical recording medium.

## Claims

1. A vehicle control device (10) comprising a processor (11) configured to perform lane departure suppression control for keeping a vehicle (1) from departing a lane (L), in which vehicle control device (10),
the processor (11) is configured to make a computer mounted in the vehicle control device (10) perform the following processing:
recognize a lane (L) between a first boundary (L1) and a second boundary (L2) based on detection values detecting an environment of surroundings of the vehicle (1),
perform lane departure suppression control so as to run in the lane (L),
set a first imaginary boundary (M1) at a position of a side surface of an object (T) inside of the lane (L) if recognizing an object (T) present inside of the lane (L) at the first boundary (L1),
set a second imaginary boundary (M2) at a position outside the second boundary (L2) by a distance of an offset amount (Do), in accordance with a first width (Dy) of a distance between the first imaginary boundary (M1) and the second boundary (L2),
set a start position (S) of the lane departure suppression control at a position a predetermined distance (Ds) away from the second imaginary boundary (M2) in an inside direction of the lane (L), and
perform lane departure suppression control in case of securing a clearance distance (Dc) away from an object (T) and run avoiding the object (T) inside an imaginary lane (M) set between the first imaginary boundary (M1) and the second imaginary boundary (M2).

2. The vehicle control device (10) according to claim 1, wherein the processor (11) is configured to make the computer perform the following processing:
set a distance between the start position (S) and the second imaginary boundary (M2) in accordance with a horizontal movement speed (Vy) in a lane transverse direction perpendicularly intersecting a lane direction of the lane (L).

3. The vehicle control device (10) according to claim 1 or 2, wherein the processor (11) is configured to make the computer perform the following processing:
if determining that the vehicle (1) strays over the start position (S) in case of securing the clearance distance (Dc) and avoiding an object (T),
set a differential value of a second width (Dc+Dw+Ds), obtained by adding the clearance distance (Dc), a vehicle width (Dw) of the vehicle (1), and a distance between the start position (S) and the second imaginary boundary (M2), minus the first width (Dy), as the offset amount (Do),
move the second imaginary boundary (M2) to a position offset by a distance of the offset amount (Do) from the second boundary (L2) to outside the lane (L),
move the start position (S) based on the second imaginary boundary (M2) after movement.

4. The vehicle control device (10) according to any one of claim 1 to 3, wherein the processor (11) is configured to make the computer perform the following processing:
set the clearance distance (Do) in accordance with the speed (V) of the vehicle (1).

5. The vehicle control device (10) according to any one of claim 1 to 4, wherein the processor (11) is configured to make the computer perform the following processing:
output a predetermined warning from a warning part (3) if the vehicle (1) strays over the start position (S) at the imaginary lane.

6. The vehicle control device (10) according to any one of claim 1 to 5, wherein the processor (11) is configured to make the computer perform the following processing:
control a steering part (4) to keep the vehicle (1) from departing from the imaginary lane (M) if the vehicle (1) strays over the start position (S) in the imaginary lane (M).

7. A computer program installed in a vehicle control device (10) performing lane departure suppression control keeping a vehicle (1) from departing from a lane being run in,
the computer program being configured to make a computer mounted in the vehicle control device (10) perform the following processing:
recognize a lane (L) between a first boundary (L1) and a second boundary (L2) based on detection values detecting an environment of surroundings of the vehicle (1),
perform lane departure suppression control so as to run in the lane (L),
set a first imaginary boundary (M1) at a position of a side surface of an object (T) inside of the lane (L) if recognizing an object (T) present inside of the lane (L) at the first boundary (L1),
set a second imaginary boundary (M2) at a position outside the second boundary (L2) by a distance of an offset amount (Do), in accordance with a first width (Dy) of a distance between the first imaginary boundary (M1) and the second boundary (L2),
set a start position (S) of the lane departure suppression control at a position a predetermined distance (Ds) away from the second imaginary boundary (M2) in an inside direction of the lane (L), and
perform lane departure suppression control in case of securing a clearance distance (Dc) away from an object (T) and run avoiding the object (T) inside an imaginary lane (M) set between the first imaginary boundary (M1) and the second imaginary boundary (M2).

## Patentansprüche

1. Fahrzeugsteuerungsvorrichtung (10), umfassend einen Prozessor (11), der dazu konfiguriert ist, eine Steuerung zum Unterdrücken einer Spurabweichung auszuführen, um ein Fahrzeug (1) daran zu hindern, von einer Spur (L) abzuweichen, wobei bei der Fahrzeugsteuerungsvorrichtung (10),
der Prozessor (11) dazu konfiguriert ist, zu bewirken, dass ein Computer, der in der Fahrzeugsteuerungsvorrichtung (10) eingebaut ist, die folgende Verarbeitung ausführt:
Erkennen einer Spur (L) zwischen einer ersten Grenze (L1) und einer zweiten Grenze (L2) basierend auf Detektionswerten, die eine Umgebung des Umfelds des Fahrzeugs (1) zu detektieren,
Ausführen einer Steuerung zum Unterdrücken einer Spurabweichung, um auf der Spur (L) zu fahren,
Einstellen einer ersten gedachten Grenze (M1) in einer Position einer Seitenfläche eines Objekts (T) innerhalb der Spur (L), falls ein Objekt (T), das innerhalb der Spur (L) vorhanden ist, an der ersten Grenze (L1) erkannt wird,
Einstellen einer zweiten gedachten Grenze (M2) in einer Position außerhalb der zweiten Grenze (L2) auf einen Abstand eines Versatzbetrags (Do) gemäß der ersten Breite (Dy) eines Abstands zwischen der ersten gedachten Grenze (M1) und der zweiten Grenze (L2),
Einstellen einer Startposition (S) der Steuerung zum Unterdrücken einer Spurabweichung in einer Position in einen vorbestimmten Abstand (Ds) von der zweiten gedachten Grenze (M2) entfernt in einer Richtung der Spur (L) nach innen, und
Ausführen der Steuerung zum Unterdrücken einer Spurabweichung für den Fall, dass ein Sicherheitsabstand (Dc) gegenüber einem Objekt (T) eingehalten wird, und Fahren unter Vermeidung des Objekts (T) innerhalb einer gedachten Spur (M), die zwischen der ersten gedachten Grenze (M1) und der zweiten gedachten Grenze (M2) eingestellt ist.

2. Fahrzeugsteuerungsvorrichtung (10) nach Anspruch 1, wobei der Prozessor (11) dazu konfiguriert ist, zu bewirken, dass der Computer die folgende Verarbeitung ausführt:
Einstellen eines Abstands zwischen der Startposition (S) und der zweiten gedachten Grenze (M2) gemäß einer horizontalen Bewegungsgeschwindigkeit (Vy) in einer Spurquerrichtung, welche die Spurrichtung der Spur (L) rechtwinklig schneidet.

3. Fahrzeugsteuerungsvorrichtung (10) nach Anspruch 1 oder 2, wobei der Prozessor (11) dazu konfiguriert ist, zu bewirken, dass der Computer die folgende Verarbeitung ausführt:
falls bestimmt wird, dass das Fahrzeug (1) über die Startposition (S) hinaus abschweift, für den Fall, dass der Sicherheitsabstand (Dc) eingehalten wird und ein Objekt (T) vermieden wird,
Einstellen eines Differenzwertes einer zweiten Breite (Dc+Dw+Ds), die durch Addieren des Sicherheitsabstands (Dc), einer Fahrzeugbreite (Dw) des Fahrzeugs (1) und eines Abstands zwischen der Startposition (S) und der zweiten gedachten Grenze (M2) erzielt wird, abzüglich der ersten Breite (Dy), als den Versatzbetrag (Do),
Verschieben der zweiten gedachten Grenze (M2) in eine Position, die um einen Abstand des Versatzbetrags (Do) von der zweiten Grenze (L2) nach außerhalb der Spur (L) versetzt ist,
Verschieben der Startposition (S) basierend auf der zweiten gedachten Grenze (M2) nach dem Verschieben.

4. Fahrzeugsteuerungsvorrichtung (10) nach einem der Ansprüche 1 bis 3, wobei der Prozessor (11) dazu konfiguriert ist, zu bewirken, dass der Computer die folgende Verarbeitung ausführt:
Einstellen des Sicherheitsabstands (Do) gemäß der Geschwindigkeit (V) des Fahrzeugs (1).

5. Fahrzeugsteuerungsvorrichtung (10) nach einem der Ansprüche 1 bis 4, wobei der Prozessor (11) dazu konfiguriert ist, zu bewirken, dass der Computer die folgende Verarbeitung ausführt:
Ausgeben einer vorbestimmten Warnung aus einer Warnvorrichtung (3), falls das Fahrzeug (1) über die Startposition (S) hinaus auf der gedachten Spur abschweift.

6. Fahrzeugsteuerungsvorrichtung (10) nach einem der Ansprüche 1 bis 5, wobei der Prozessor (11) dazu konfiguriert ist, zu bewirken, dass der Computer die folgende Verarbeitung ausführt:
Steuern einer Lenkvorrichtung (4), um das Fahrzeug (1) daran zu hindern, von der gedachten Spur (M) abzuweichen, falls das Fahrzeug (1) über die Startposition (S) hinaus in der gedachten Spur (M) abschweift.

7. Computerprogramm, das in einer Fahrzeugsteuerungsvorrichtung (10) installiert ist, die eine Steuerung zum Unterdrücken einer Spurabweichung ausführt, die ein Fahrzeug (1) daran hindert, von einer Spur abzuweichen, auf der es fährt,
wobei das Computerprogramm dazu konfiguriert ist, zu bewirken, dass ein Computer, der in der Fahrzeugsteuerungsvorrichtung (10) eingebaut ist, die folgende Verarbeitung ausführt:
Erkennen einer Spur (L) zwischen einer ersten Grenze (L1) und einer zweiten Grenze (L2) basierend auf Detektionswerten, die eine Umgebung des Umfelds des Fahrzeugs (1) detektieren,
Ausführen einer Steuerung zum Unterdrücken einer Spurabweichung, um auf der Spur (L) zu fahren,
Einstellen einer ersten gedachten Grenze (M1) in einer Position einer Seitenfläche eines Objekts (T) innerhalb der Spur (L), falls ein Objekt (T), das innerhalb der Spur (L) vorhanden ist, an der ersten Grenze (L1) erkannt wird,
Einstellen einer zweiten gedachten Grenze (M2) in einer Position außerhalb der zweiten Grenze (L2) auf einen Abstand eines Versatzbetrags (Do) gemäß der ersten Breite (Dy) eines Abstands zwischen der ersten gedachten Grenze (M1) und der zweiten Grenze (L2),
Einstellen einer Startposition (S) der Steuerung zum Unterdrücken einer Spurabweichung in einer Position in einen vorbestimmten Abstand (Ds) von der zweiten gedachten Grenze (M2) entfernt in einer Richtung der Spur (L) nach innen, und
Ausführen der Steuerung zum Unterdrücken einer Spurabweichung für den Fall, dass ein Sicherheitsabstand (Dc) gegenüber einem Objekt (T) eingehalten wird, und Fahren unter Vermeidung des Objekts (T) innerhalb einer gedachten Spur (M), die zwischen der ersten gedachten Grenze (M1) und der zweiten gedachten Grenze (M2) eingestellt ist.

## Revendications

1. Dispositif de commande de véhicule (10) comprenant un processeur (11) configuré pour effectuer une commande de suppression de sortie de voie afin d'empêcher un véhicule (1) de sortir d'une voie (L), dispositif de commande de véhicule (10) dans lequel,
le processeur (11) est configuré pour faire en sorte qu'un ordinateur monté dans le dispositif de commande de véhicule (10) effectue le traitement suivant :
reconnaître une voie (L) entre une première limite (L1) et une deuxième limite (L2) sur la base de valeurs de détection détectant un environnement des alentours du véhicule (1),
effectuer une commande de suppression de sortie de voie de manière à circuler dans la voie (L),
définir une première limite imaginaire (M1) à une position d'une surface latérale d'un objet (T) à l'intérieur de la voie (L) si un objet (T) présent à l'intérieur de la voie (L) est reconnu au niveau de la première limite (L1),
définir une deuxième limite imaginaire (M2) à une position à l'extérieur de la deuxième limite (L2) par une distance d'une quantité de décalage (Do) en fonction d'une première largeur (Dy) d'une distance entre la première limite imaginaire (M1) et la deuxième limite (L2),
définir une position de départ (S) de la commande de suppression de sortie de voie à une position d'une distance prédéterminée (Ds) à l'écart de la deuxième limite imaginaire (M2) dans une direction à l'intérieur de la voie (L), et
effectuer une commande de suppression de sortie de voie dans le cas où une distance de dégagement (Dc) à l'écart d'un objet (T) est assurée, et rouler en évitant l'objet (T) à l'intérieur d'une voie imaginaire (M) définie entre la première limite imaginaire (M1) et la deuxième limite imaginaire (M2).

2. Dispositif de commande de véhicule (10) selon la revendication 1, dans lequel le processeur (11) est configuré pour faire en sorte que l'ordinateur effectue le traitement suivant :
définir une distance entre la position de départ (S) et la deuxième limite imaginaire (M2) en fonction d'une vitesse de déplacement horizontale (Vy) dans une direction transversale de voie coupant perpendiculairement une direction de voie de la voie (L).

3. Dispositif de commande de véhicule (10) selon la revendication 1 ou 2, dans lequel le processeur (11) est configuré pour faire en sorte que l'ordinateur effectue le traitement suivant :
s'il est déterminé que le véhicule (1) s'écarte de la position de départ (S) dans le cas où la distance de dégagement (Dc) est assurée et où un objet (T) est évité,
définir en tant que quantité de décalage (Do) une valeur différentielle d'une deuxième largeur (Dc + Dw + Ds) obtenue en additionnant la distance de dégagement (Dc), une largeur de véhicule (Dw) du véhicule (1) et une distance entre la position de départ (S) et la deuxième limite imaginaire (M2), moins la première largeur (Dy),
déplacer la deuxième limite imaginaire (M2) vers une position décalée par une distance de la quantité de décalage (Do) par rapport à la deuxième limite (L2) vers l'extérieur de la voie (L),
déplacer la position de départ (S) sur la base de la deuxième limite imaginaire (M2) après déplacement.

4. Dispositif de commande de véhicule (10) selon l'une des revendications 1 à 3, dans lequel le processeur (11) est configuré pour faire en sorte que l'ordinateur effectue le traitement suivant :
définir la distance de dégagement (Do) en fonction de la vitesse (V) du véhicule (1).

5. Dispositif de commande de véhicule (10) selon l'une des revendications 1 à 4, dans lequel le processeur (11) est configuré pour faire en sorte que l'ordinateur effectue le traitement suivant :
émettre un avertissement prédéterminé à partir d'une partie avertissement (3) si le véhicule (1) s'écarte de la position de départ (S) sur la voie imaginaire.

6. Dispositif de commande de véhicule (10) selon l'une des revendications 1 à 5, dans lequel le processeur (11) est configuré pour faire en sorte que l'ordinateur effectue le traitement suivant :
commander une partie de direction (4) pour empêcher une sortie du véhicule (1) de la voie imaginaire (M) si le véhicule (1) s'écarte de la position de départ (S) dans la voie imaginaire (M).

7. Programme informatique installé dans un dispositif de commande de véhicule (10) effectuant une commande de suppression de sortie de voie empêchant un véhicule (1) de sortir d'une voie sur laquelle il circule,
le programme informatique étant configuré pour faire en sorte qu'un ordinateur monté dans le dispositif de commande de véhicule (10) effectue le traitement suivant :
reconnaître une voie (L) entre une première limite (L1) et une deuxième limite (L2) sur la base de valeurs de détection détectant un environnement des alentours du véhicule (1),
effectuer une commande de suppression de sortie de voie de manière à circuler dans la voie (L),
définir une première limite imaginaire (M1) à une position d'une surface latérale d'un objet (T) à l'intérieur de la voie (L) si un objet (T) présent à l'intérieur de la voie (L) est reconnu au niveau de la première limite (L1),
définir une deuxième limite imaginaire (M2) à une position à l'extérieur de la deuxième limite (L2) par une distance d'une quantité de décalage (Do) en fonction d'une première largeur (Dy) d'une distance entre la première limite imaginaire (M1) et la deuxième limite (L2),
définir une position de départ (S) de la commande de suppression de sortie de voie à une position d'une distance prédéterminée (Ds) à l'écart de la deuxième limite imaginaire (M2) dans une direction à l'intérieur de la voie (L), et
effectuer une commande de suppression de sortie de voie dans le cas où une distance de dégagement (Dc) à l'écart d'un objet (T) est assurée, et rouler en évitant l'objet (T) à l'intérieur d'une voie imaginaire (M) définie entre la première limite imaginaire (M1) et la deuxième limite imaginaire (M2).
